(19) Europäisches Patentamt
European Patent Office
Office européen des brevets

(11) **EP 4 585 427 A1**

(12) **EUROPEAN PATENT APPLICATION**
published in accordance with Art. 153(4) EPC

(43) Date of publication:
**16.07.2025 Bulletin 2025/29**

(21) Application number: **23863155.0**

(22) Date of filing: **04.09.2023**

(51) International Patent Classification (IPC):
***B60B 17/00*** *(2006.01)*

(52) Cooperative Patent Classification (CPC):
**B60B 17/00**

(86) International application number:
**PCT/JP2023/032281**

(87) International publication number:
**WO 2024/053617 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.09.2022 JP 2022142761**

(71) Applicant: **NIPPON STEEL CORPORATION
Chiyoda-ku
Tokyo 100-8071 (JP)**

(72) Inventors:
• **UENISHI, Ayumi
Tokyo 100-8071 (JP)**
• **YAMAMURA, Yoshinari
Tokyo 100-8071 (JP)**
• **NOGUCHI, Jun
Tokyo 100-8071 (JP)**

(74) Representative: **Zimmermann & Partner
Patentanwälte mbB
Postfach 330 920
80069 München (DE)**

(54) **WHEEL**

(57)     A wheel (100) includes a boss (10), a rim (20), and a web (30). When viewed in a longitudinal section of the wheel (100), the boss (10) includes a contour (14) extending from the web (30) to an end face (12) in the axial direction of the boss (10). The contour (14) includes curves (141, 142). A first curve (141) is continuous with the web (30). The first curve (141) has a first radius of curvature (R1). The second curve (142) is arranged on the end face (12) side in the axial direction of the boss (10) relative to the first curve (141). The second curve (142) has a second radius of curvature (R2). The second radius of curvature (R2) is greater than the first radius of curvature (R1). The path length of the second curve (142) is greater than the path length of the first curve (141).

FIG. 1

**Description**

TECHNICAL FIELD

The present disclosure relates to a wheel for a railway vehicle.

BACKGROUND ART

A wheel for a railway vehicle includes a boss, a rim, and a web. An axle is inserted into the boss. The rim is arranged on the outer circumferential side of the boss. The rim includes a tread and a flange. The tread is a surface that is to come into contact with the top surface of a rail. The flange is provided continuous with one end of the tread, and protrudes to the outer circumferential side of the wheel relative to the tread. The web connects the rim and the boss.

To date, wheels of various shapes have been proposed. For example, Patent Literatures 1 and 2 disclose wheels that have a curved web. In Patent Literature 1, the web has a substantially S-shape when the wheel is viewed in longitudinal section. In Patent Literature 2, the web has a curved shape that is convex on one side in the axle direction when the wheel is viewed in longitudinal section.

Patent Literatures 3 and 4 disclose wheels that have a web which has a substantially straight shape. In the wheels disclosed in Patent Literatures 3 and 4, the web is inclined with respect to the radial direction of the wheel.

CITATION LIST

PATENT LITERATURE

Patent Literature 1: Japanese Patent Application Publication No. 10-29401
Patent Literature 2: Japanese Translation of PCT International Application Publication No. 2009-545484
Patent Literature 3: International Application Publication No. WO2020/241401
Patent Literature 4: International Application Publication No. WO2022/091764

SUMMARY OF INVENTION

TECHNICAL PROBLEM

A wheel for a railway vehicle is required to have strength as a basic characteristic. Further, from the viewpoint of saving energy and reducing the risk of damage to the railway tracks, a wheel for a railway vehicle is required to be lightweight. That is, it is preferable that a wheel for a railway vehicle has the required strength and has been made as lightweight as possible.

An objective of the present disclosure is to provide a wheel for a railway vehicle that can achieve weight reduction while ensuring strength.

SOLUTION TO PROBLEM

A wheel for a railway vehicle according to the present disclosure includes a boss, a rim, and a web. The boss has a cylindrical shape. The rim is arranged on an outer circumferential side of the boss. The web connects the boss and the rim. When the wheel is viewed in longitudinal section, the boss includes a contour extending from the web to an end face in an axial direction of the boss. The contour includes a first curve and a second curve. The first curve is continuous with the web. The first curve is curved concavely toward an inward side of the boss, and has a first radius of curvature. The second curve is arranged on the end face side in the axial direction of the boss relative to the first curve. The second curve is curved concavely toward the inward side of the boss, and has a second radius of curvature. The second radius of curvature is greater than the first radius of curvature. A path length of the second curve is greater than a path length of the first curve.

ADVANTAGEOUS EFFECTS OF INVENTION

According to the present disclosure, the weight reduction of a wheel for a railway vehicle can be achieved while ensuring the strength of the wheel.

BRIEF DESCRIPTION OF DRAWINGS

[FIG. 1] FIG. 1 is a drawing of longitudinal section of a wheel for a railway vehicle according to an embodiment.
[FIG. 2] FIG. 2 is a drawing of longitudinal section of a wheel for a railway vehicle according to a modification of the embodiment.
[FIG. 3] FIG. 3 is a drawing of longitudinal section of a wheel for a railway vehicle according to another modification of the embodiment.
[FIG. 4] FIG. 4 is a view illustrating an outer edge of a longitudinal section of a wheel used in a Second Example.
[FIG. 5] FIG. 5 is a view illustrating an outer edge of a longitudinal section of a wheel used in a Third Example.
[FIG. 6] FIG. 6 is a view illustrating an outer edge of a longitudinal section of a wheel used in a Fourth Example.
[FIG. 7] FIG. 7 is a view illustrating a 1/3 octave band frequency response of equivalent radiated power (ERP).

DESCRIPTION OF EMBODIMENTS

A wheel for a railway vehicle according to an embodiment includes a boss, a rim, and a web. The boss has a cylindrical shape. The rim is arranged on an outer circumferential side of the boss. The web connects the boss and the rim. When the wheel is viewed in longitudinal section, the boss includes a contour extending from the web to an end face in an axial direction of the boss. The contour includes a first curve and a second curve. The first curve is continuous with the web. The first curve is curved concavely toward the inward side of the boss, and has a first radius of curvature. The second curve is arranged on the end face side in the axial direction of the boss relative to the first curve. The second curve is curved concavely toward the inward side of the boss, and has a second radius of curvature. The second radius of curvature is greater than the first radius of curvature. A path length of the second curve is greater than a path length of the first curve (first configuration).

When a wheel for a railway vehicle is viewed in longitudinal section, a boss includes a pair of contours that constitute the outer peripheral surface thereof. One of the contours is continuous with a web on a flange side, and extends to an end face in the axial direction of the cylindrical boss. The other contour is continuous with the web on the opposite side to the flange, and extends to the other end face in the axial direction of the boss. Each contour usually consists of a curve that forms a fillet portion which connects the boss to the web, and a straight line that extends from the curve to an end face of the boss. For example, when the proportion of the straight line occupying in the contour is relatively large, the thickness of the boss tends to be large. As the thickness of the boss increases, the weight of the wheel increases.

To reduce the weight of the wheel, for example, it is conceivable to make the entire contour of the boss a single curve with a constant radius of curvature. However, if the contour of the boss is composed of a single curve with a constant radius of curvature, it will be difficult to ensure a balance between weight reduction and strength. For example, in order to smoothly connect the boss to the web, it is necessary to make the slope of a tangential line at the end on the web side of the single curve constituting the contour of the boss match the slope of the contour of the web. However, if the contour of the boss extends from the web to an end face of the boss with a constant and relatively large radius of curvature, it is predicted that the thickness of the boss will be very small near the end face of the boss. It is considered that, consequently, the force with which the axle is gripped by the boss will decrease, in other words, that the strength of the wheel will be insufficient. On the other hand, although it suffices to make the radius of curvature of the contour small in order to ensure the thickness of the boss, if the radius of curvature is made excessively small, the contour of the boss will have a shape that spreads outward in the radial direction near the end face of the boss (a shape that widens toward the end). In such case, not only will the weight of the wheel increase, but stress concentration will be more likely to occur at the boundary between the boss and the web. Therefore, in a case where the contour of the boss is composed of a single curve with a constant radius of curvature, it is difficult to reduce the weight of the wheel while ensuring the strength of the wheel, and hence the degree of freedom in designing the wheel is reduced.

In contrast, in the wheel according to the first configuration, the first curve and the second curve are provided in the contour of the boss. The second curve is arranged closer to the end face side of the boss relative to the first curve. Providing the second curve allows the outer peripheral surface of the boss to be concaved. Therefore, the thickness of the boss can be reduced in comparison to a case where the portion of the contour of the boss that is on the end face side of the boss is formed as a straight line. By this means, the weight of the boss and wheel can be reduced. On the other hand, the first curve is a fillet portion that connects the boss to the web, and has a smaller radius of curvature than the second curve on the end face side of the boss. Since the first curve as a fillet portion is provided separately from the second curve on the end face side of the boss, the contour of the boss can be smoothly connected to the web without making the contour of the boss a shape that widens toward the end. Therefore, stress concentration at the boundary between the boss and the web can be suppressed and the strength of the wheel can be ensured.

Thus, according to the first configuration, the weight reduction of the wheel can be achieved while ensuring the strength of the wheel for a railway vehicle.

In addition to being lightweight, a wheel for a railway vehicle is also required to be quiet due to environmental considerations. However, a trade-off relationship exists between improving the quietness of a wheel and reducing the weight of the wheel. In other words, when it is attempted to improve the quietness of a wheel when a railway vehicle is running, usually the weight of the wheel increases.

In order to identify regions that affect quietness in a wheel for a railway vehicle, the inventors carried out a frequency response analysis by the finite element method using general-purpose structural analysis software. In the analysis, a force simulating a rail reaction force was applied to the tread of a 360° wheel model, and the response to vibration at that time was evaluated. The equivalent radiated power (ERP) obtained by the following equation was used as an evaluation index.

[Expression 1]

$$ERP = c \sum_{i=1}^{N} V_{ni}^2 \Delta S_i$$

In the above equation, $\Delta S_i$ is the elemental area of the wheel surface, and $V_{ni}$ is the vibration velocity in the normal direction of the surface. Further, c is a coefficient determined according to atmospheric conditions and the like. A larger ERP indicates a greater ability to radiate sound. Carbon steel with a carbon content of 0.7% was used as the material of the wheel.

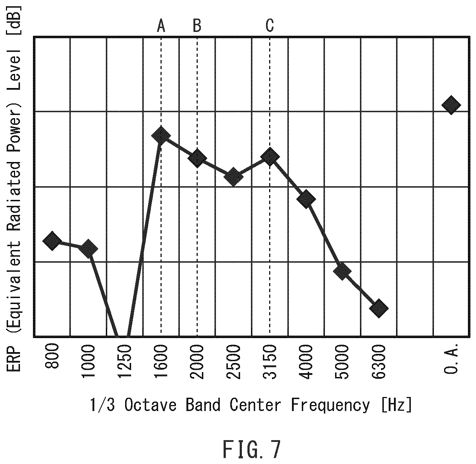

FIG. 7 is a graph obtained by carrying out the frequency response analysis, and shows the 1/3 octave band frequency response of the ERP. In FIG. 7, O.A. is the sum of the energy amounts of all frequencies (overall ERP level). It was confirmed that the ERP levels at frequencies A, B, and C were larger than the ERP levels of other frequency bands as shown in FIG. 7, and that the contribution of frequencies A, B, and C to O.A. was large. Therefore, when the deformation mode of the wheel was investigated for each of the frequencies A, B, and C, it was found that the amount of displacement of the boss was extremely small in comparison to the rim and the web. Thus, it can be said that the influence which the shape of the boss has on the ERP, in other words, the influence on the quietness of the wheel, is slight.

Based on the novel finding that the influence which the shape of the boss has on the quietness of the wheel is slight, in the first configuration, the shape of the boss is designed so that the weight of the boss is reduced. More specifically, in the contour of the boss, by arranging the second curve whose radius of curvature is relatively large closer to the end face side of the boss than the first curve that serves as a fillet portion, the thickness of the boss is reduced while ensuring the rigidity of the web, whose contribution to quietness is large. This makes it possible to reduce the weight of the wheel while maintaining the quietness of the wheel when the railway vehicle is running.

Preferably, the second radius of curvature is 108 mm or more and less than 700 mm (second configuration).

In the second configuration, in the contour of the boss extending from the web, the radius of curvature of the second curve on the end face side of the boss is 108 mm or more and less than 700 mm. In this case, the quietness of the wheel when the railway vehicle is running can be improved while also reducing the weight of the wheel.

An embodiment of the present disclosure is described hereunder while referring to the accompanying drawings. In the drawings, the same reference symbols are assigned to the same or equivalent parts, and a description thereof is not repeated.

[Configuration of wheel]

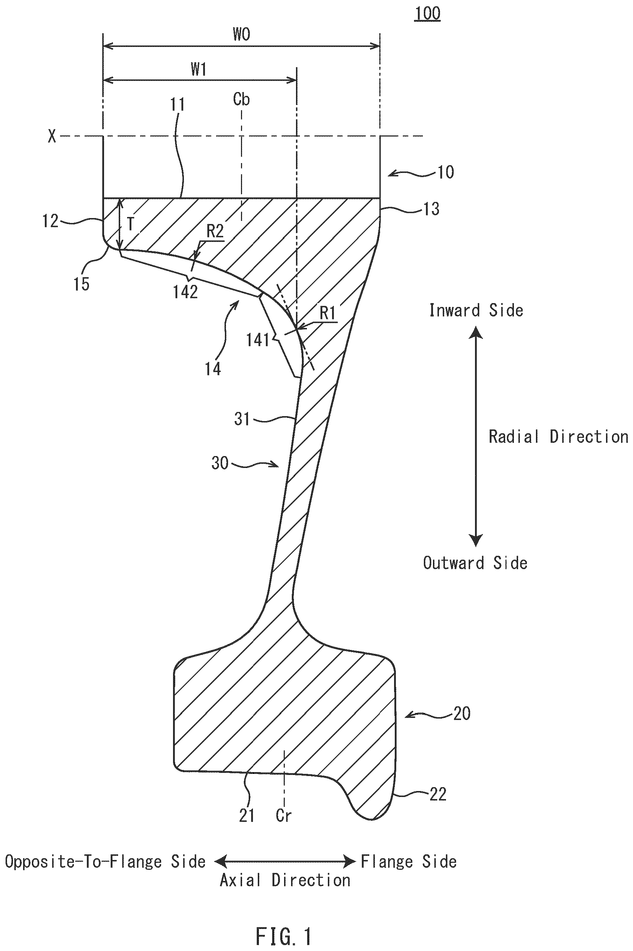

FIG. 1 is a drawing of longitudinal section of a wheel 100 for a railway vehicle according to the present embodiment. The term "longitudinal section of the wheel 100" refers to a cross section of the wheel 100 that includes a central axis X. The longitudinal section of the wheel 100 is symmetric about the central axis X, and therefore FIG. 1 illustrates the wheel 100 on one side of the central axis X only. In the present embodiment, the direction in which the central axis X of the wheel 100 extends is referred to as "axial direction". Further, in the present embodiment, the radial direction of the wheel 100 may be referred to simply as the "radial direction".

Referring to FIG. 1, the wheel 100 includes a boss 10, a rim 20, and a web 30.

The boss 10 forms an inner circumferential portion of the wheel 100. The boss 10 has a cylindrical shape. An axle of a railway vehicle (not illustrated) is to be inserted into the boss 10.

The rim 20 is arranged on the outer circumferential side of the boss 10. The rim 20 forms an outer circumferential portion of the wheel 100. The rim 20 includes a tread 21 and a flange 22.

The tread 21 is provided on the outer peripheral surface of the rim 20. The tread 21 is a surface which faces outward in the radial direction of the wheel 100. The tread 21 comes into contact with the top surface of a rail on which the railway vehicle runs.

The flange 22 is provided continuous with one end of the tread 21 in the axial direction of the wheel 100. The flange 22 protrudes radially outward from the tread 21. When the railway vehicle runs on a rail, the flange 22 is positioned on the inner side of the rail in the track width direction. Hereinafter, the side that is closer to the flange 22 in the axial direction will be referred to as the "flange side", and the side that is farther from the flange 22 in the axial direction will be referred to as the "opposite-to-flange side".

In the example of the present embodiment, the rim 20 is positioned on the inner side in the track width direction relative to the boss 10. More specifically, a rim-width center Cr is positioned on the flange side relative to a boss-width center Cb. The rim-width center Cr is the center of the rim 20 in the axial direction of the wheel 100. The boss-width center Cb is the center of the boss 10 in the axial direction of the wheel 100.

The web 30 is an annular shape, and connects the boss 10 and the rim 20. The web 30 is formed integrally with the boss 10 and the rim 20. In the example of the present embodiment, the web 30 has a substantially straight shape when the wheel 100 is viewed in longitudinal section. The web 30 may be inclined with respect to the radial direction of the wheel 100. In the example illustrated in FIG. 1, the web 30 is inclined with respect to the radial direction so that the outer circumferential portion of the web 30 is disposed on the opposite-to-flange side compared to the inner circumferential portion.

The configuration of the boss 10 will now be described in more detail referring further to FIG. 1.

As illustrated in FIG. 1, the boss 10 includes an inner peripheral surface 11, end faces 12 and 13, a contour 14, and a corner portion 15.

When the wheel 100 is viewed in longitudinal section, the inner peripheral surface 11 of the boss 10 extends in the axial direction of the wheel 100. When the wheel 100 is viewed in longitudinal section, the end faces 12 and 13 of the boss 10 are continuous with both ends of the inner peripheral surface 11 and extend radially outward from the inner peripheral surface 11. One end face 12 is arranged on the opposite-to-flange side relative to the other end face 13.

When the wheel 100 is viewed in longitudinal section, the contour 14 of the boss 10 is disposed on the outward side in the radial direction relative to the inner peripheral surface 11. When the wheel 100 is viewed in longitudinal section, the contour 14 extends from the web 30 to the end face 12 on the opposite-to-flange side of the boss 10. When the wheel 100 is viewed in longitudinal section, the contour 14 is provided continuous with a contour 31 on the opposite-to-flange side of the web 30. Further, the contour 14 is connected to the end face 12 on the opposite-to-flange side of the boss 10 via the substantially arc-shaped corner portion 15. The contour 14 includes a first curve 141 and a second curve 142.

The first curve 141 is continuous with the web 30. When the wheel 100 is viewed in longitudinal section, the first curve 141 is disposed adjacent to the contour 31 on the opposite-to-flange side of the web 30. The first curve 141 is smoothly connected to the contour 31 of the web 30. As viewed in a longitudinal section of the wheel 100, the first curve 141 is curved concavely toward the inward side of the boss 10. The first curve 141 is a fillet portion that connects the boss 10 to the web 30.

The second curve 142 is arranged on the end face 12 side of the boss 10 relative to the first curve 141. In the example of the present embodiment, the second curve 142 is provided continuous with the first curve 141. The second curve 142 extends from the first curve 141 to the corner portion 15. The second curve 142 is curved concavely toward the inward side of the boss 10.

The first curve 141 has a radius of curvature R1. The second curve 142 has a radius of curvature R2. The radius of curvature R2 of the second curve 142 is greater than the radius of curvature R1 of the first curve 141 that is the fillet portion. The radius of curvature R2 of the second curve 142 is, for example, 2.0 times or more the radius of curvature R1 of the first curve 141, and preferably is 2.5 times or more the radius of curvature R1 of the first curve 141. Preferably, the radius of curvature R2 of the second curve 142 is 108 mm or more and less than 700 mm. More preferably, the radius of curvature R2 of the second curve 142 is 108 mm or more and 200 mm or less, and further preferably is 110 mm or more and 200 mm or less. The radius of curvature R1 of the first curve 141 is, for example, 50 mm or less. The radius of curvature R1 of the first curve 141 may be 30 mm or more.

When the wheel 100 is viewed in longitudinal section, the path length of the second curve 142 is greater than the path length of the first curve 141. That is, the proportion of the second curve 142 occupying in the contour 14 of the boss 10 is greater than the proportion occupied by the first curve 141. The path length of the second curve 142 is, for example, 1/3 or more of the path length of the entire contour 14. The path length of the second curve 142 is preferably 2/5 or more of the path length of the entire contour 14, and more preferably is 2/3 or more of the path length of the entire contour 14. The phrase "path length of the entire contour 14" means the length along the external shape of the wheel 100 from the boundary between the contour 31 of the web 30 and the first curve 141 to a round-portion border on the opposite side to the end face 12 of the corner portion 15.

The first curve 141 is a single curve having a substantially constant radius of curvature in longitudinal sectional view of the wheel 100. The second curve 142 may be any line that can be recognized as a continuous single curve in longitudinal sectional view of the wheel 100. For example, in a case where a curve is formed in a pseudo manner by connecting a plurality of straight lines that have a short path length, this pseudo-curve can be regarded as a continuous single curve. Further, for example, in a case where a curve is formed in a pseudo manner by intermixing straight lines and curves which have a short path length, this pseudo-curve can be regarded as a continuous single curve. In the present embodiment, a curve is defined as a line extending with a radius of curvature of less than 1000 mm.

The first curve 141 and the second curve 142 can be identified as follows.

In longitudinal sectional view of the wheel 100, normally there is a point where the curvature changes at the boundary between the contour 31 of the web 30 and the contour 14 of the boss 10. A single curve that extends with a constant radius of curvature radially inward toward the end face 12 of the boss 10 from this point where the curvature changes can be identified as the first curve 141.

The second curve 142 exists in a region of the contour 14 of the boss 10 that is further inward than the first curve 141 in the radial direction. In this region, a line that can be recognized as an apparently continuous single curve can be identified as the second curve 142. For example, a clearly straight line having a path length of more than 90 mm, and a broken line that constitutes a characteristic shape such as an uneven shape are not included in lines that can be recognized as a single curve. The radius of curvature R2 of the second curve 142 can be taken as the radius of curvature when a line that can be recognized as a single curve is approximated as a circular arc. In a case where a plurality of lines that can be recognized as an apparently continuous single curve exist in a region of the contour 14 of the boss 10 further inward in the radial direction than the first curve 141, the line whose radius of curvature when approximated as a circular arc is greater than the radius of curvature R1 of the first curve 141 and which has the longest path length is the second curve 142.

When the distance in the axial direction between the two end faces 12 and 13 of the boss 10 is defined as a total width WO of the boss 10, and the distance in the axial direction from the end face 12 on the contour 14 side to the apex of the first curve 141 is defined as a width W1 of the contour 14, preferably the proportion of the width W1 of the contour 14 occupying in the total width WO of the boss 10 is large. Preferably, the total width WO of the boss 10 and the width W1 of the contour 14 satisfy the expression $W1/WO \geq 0.5$, and more preferably satisfy the expression $W1/WO \geq 0.6$. Although the upper limit of W1/WO is not particularly limited, $W1/WO \leq 0.8$ is satisfied, for example.

As illustrated in FIG. 1, the boss 10 has a boss thickness T. The boss thickness T is the length in the radial direction from the inner peripheral surface 11 of the boss 10 to the boundary between the contour 14 and the corner portion 15 (round-portion border of the corner portion 15). From the viewpoint of securing a force with which the boss 10 grips the axle, the boss thickness T is preferably 10 mm or more. The boss thickness T may be 20 mm or more. The boss thickness T is, for example, 60 mm or less. Preferably, the boss thickness T is 45 mm or less.

Although not particularly limited, this kind of wheel 100 can be produced, for example, by forging or casting, or by machining (cutting) a forged product or a cast product. The material of the wheel 100 is preferably carbon steel.

[Advantageous effects]

In the wheel 100 according to the present embodiment, the first curve 141 is provided in the contour 14 of the boss 10. The first curve 141 is adjacent to the contour 31 of the web 30 and has a relatively small radius of curvature R1. The contour 14 of the boss 10 is smoothly connected to the contour 31 of the web 30 by the first curve 141. Further, since the first curve 141 does not extend as far as the vicinity of the end face 12 of the boss 10, it is possible to prevent the contour 14 from becoming a shape that widens toward the end face 12. Consequently, it is difficult for stress concentration to occur at the boundary between the contour 14 of the boss 10 and the contour 31 of the web 30. Hence, the strength of the wheel 100 can be secured.

In the wheel 100 according to the present embodiment, the second curve 142 is also provided in the contour 14 of the boss 10. The second curve 142 is arranged on the end face 12 side of the boss 10 relative to the first curve 141. The second curve 142 extends towards the end face 12 of the boss 10 while allowing the outer peripheral surface of the boss 10 to be concaved with a relatively large radius of curvature R2. By this means, the boss thickness T on the end face 12 side can be reduced. Therefore, the weight of the boss 10 and the weight of the wheel 100 that includes the boss 10 can be reduced.

Thus, according to the present embodiment, the necessary strength can be secured for the wheel 100 for a railway, and the weight of the wheel 100 can be reduced.

When the wheel 100 is running on a rail, the boss 10 is less easily deformed in comparison to the rim 20 and the web 30, and the influence of the shape of the boss 10 on the quietness of the wheel 100 is minor. Therefore, in the present embodiment, in the contour 14 of the boss 10, in addition to the first curve 141 as a fillet portion, the second curve 142 having a relatively large radius of curvature R2 is provided on the end face 12 side of the boss 10 to thereby reduce the thickness of the boss 10. In this case, the weight of the boss 10 and the weight of the wheel 100 that includes the boss 10 can be reduced without substantially reducing the quietness of the wheel 100.

In the present embodiment, preferably the radius of curvature R2 of the second curve 142 is 108 mm or more and less than 700 mm. By this means, it is possible to improve the quietness of the wheel 100 when the railway vehicle is running, while also reducing the weight of the wheel 100. From the viewpoint of further reducing the weight of the wheel 100, the radius of curvature R2 of the second curve 142 is more preferably 108 mm or more and 200 mm or less, and further preferably is 110 mm or more and 200 mm or less.

In the wheel 100 according to the present embodiment, preferably the proportion of the width W1 of the contour 14 occupying in the total width WO of the boss 10 is large. Preferably, the total width WO of the boss 10 and the width W1 of the contour 14, for example, satisfy the expression W1/WO $\geq$ 0.5, and more preferably satisfy the expression W1/WO $\geq$ 0.6. When W1/WO is large, the path length of the second curve 142 included in the contour 14 is easily secured. That is, a region concaved by the second curve 142 in the boss 10 will tend to be large. Therefore, when W1/WO is large, a higher effect can be achieved with respect to reducing the weight of the wheel 100 in comparison to a case where W1/WO is small, even if the radius of curvature R2 of the second curve 142 is the same.

An embodiment according to the present disclosure has been described above. However, the present disclosure is not limited to the above embodiment, and various modifications may be made without departing from the gist of the present disclosure.

In the wheel 100 according to the above embodiment, the rim-width center Cr is located on the flange side relative to the boss-width center Cb. Further, in the above embodiment, the web 30 has a substantially straight shape in longitudinal sectional view of the wheel 100. Furthermore, in the above embodiment, the contour 14 of the boss 10 that includes the curves 141 and 142 is provided continuous with the contour 31 on the opposite-to-flange side of the web 30. However, the shape of the wheel 100 and the region where the contour 14 is provided are not limited to the example of the above embodiment.

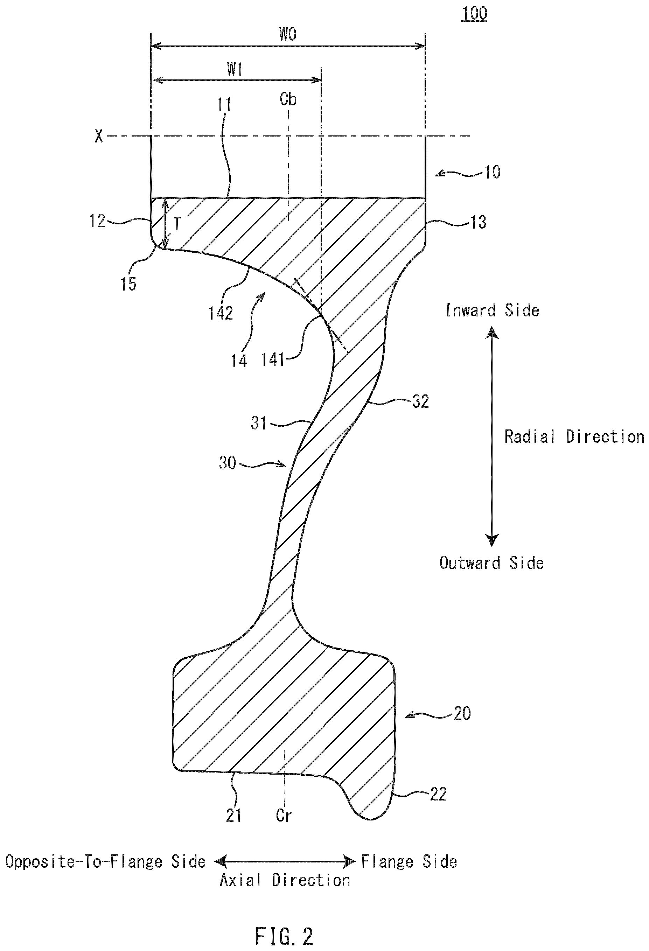

For example, the rim-width center Cr may be located on the opposite-to-flange side relative to the boss-width center Cb, as in a wheel 100 illustrated in FIG. 2. Further, as illustrated in FIG. 2, the web 30 may be curved in longitudinal sectional view of the wheel 100. In the example in FIG. 2, similarly to the embodiment described above, the contour 14 of the boss 10 is provided continuous with the contour 31 on the opposite-to-flange side of the web 30. However, the contour 14 including the curves 141 and 142 may be provided continuous with a contour 32 on the flange side of the web 30.

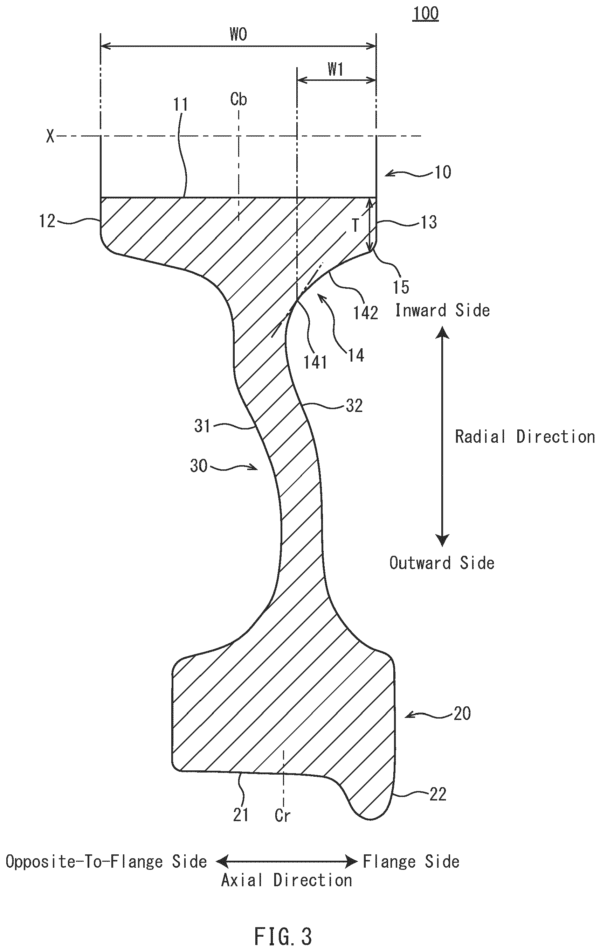

For example, even in a case where the rim-width center Cr is located on the flange side relative to the boss-width center Cb, as in a wheel 100 illustrated in FIG. 3, the contour 14 of the boss 10 can be provided continuous with the contour 32 on the flange side of the web 30. In this case, when the wheel 100 is viewed in longitudinal section, the contour 14 extends from the contour 32 on the flange side of the web 30 and is connected to the end face 13 on the flange side of the boss 10 via the corner portion 15.

Thus, the contour 14 of the boss 10 described in the above embodiment can be applied regardless of the basic shape of a wheel for a railway vehicle. It suffices that the contour 14 including the curves 141 and 142 is provided adjacent to at least one of the contour 31 on the opposite-to-flange side and the contour 32 on the flange side of the web 30.

In the above embodiment, the contour 14 of the boss 10 is constituted by the two curves 141 and 142. However, the contour 14 can include three or more curves having a different radius of curvature to each other. In a case where the contour 14 includes three or more curves, the curve arranged at the closest position to the web 30 among these three curves is the first curve 141, and among the remaining curves, a curve that has a larger radius of curvature than the radius of curvature R1 of the first curve 141 and that has the longest path length is the second curve 142. From the viewpoint of ensuring a sufficient path length of the second curve 142 and effectively reducing the weight of the boss 10, preferably the number of curves included in the contour 14, in other words, the number of lines regarded as a continuous single curve, is four or less.

The contour 14 of the boss 10 can include one or more straight lines in addition to a plurality of curves. Here, the term "straight line" means a region which, in the contour 14, for example has a path length of more than 90 mm and whose radius of curvature is 1000 mm or more. In a case where one or a plurality of straight lines are included in the contour 14, the path length of the straight line(s) will be significantly smaller than the path length of the second curve 142.

EXAMPLES

Hereunder, the present disclosure is described in further detail by way of examples. However, the present disclosure should not be construed to be limited to the following examples.

[First Example]

To verify the advantageous effects achieved according to the present disclosure, the shape of the wheel 100 illustrated in FIG. 1 was subjected to analysis by the finite element method using general-purpose structural analysis software. In the analysis, a force simulating a rail reaction force was applied to the tread of a 360° wheel model, and the response to vibration at such time was evaluated as the quietness of the wheel. The aforementioned equivalent radiated power (overall ERP level) was used to evaluate the quietness. The conditions and results of the analysis are shown in Table 1.

[Table 1]

TABLE 1

|  | Radius of Curvature R2 of Second Curve (mm) | Boss Thickness T (mm) | Boss Width Ratio W1/WO | Weight (kg) | Quietness Index |
|---|---|---|---|---|---|
| Example 1 | 112 | 22 | 0.70 | 8.6 | 0.02 |
| Example 2 | 130 | 26 | 0.70 | 6.1 | 0.02 |
| Example 3 | 144 | 30 | 0.70 | 4.2 | 0.03 |
| Example 4 | 183 | 36 | 0.69 | 1.7 | 0.04 |
| Example 5 | 700 | 46 | 0.67 | 0.1 | 0.00 |
| Comparative Example 1 | ∞ | 36 | 0.70 | 0.0 | 0.00 |
| Example 6 | 107 | 10 | 0.71 | 14.1 | -0.06 |

*1 "Weight" is the difference in weight relative to Comparative Example 1. A positive value means the weight is lighter than Comparative Example 1.
*2 "Quietness Index" is the difference in the ERP level compared to Comparative Example 1. A positive value means the quietness is better than Comparative Example 1.

In the column "Weight" in Table 1, a value obtained by subtracting the wheel weight of the respective examples from the wheel weight of Comparative Example 1 (the difference between each example and Comparative Example 1) is shown. In the column "Quietness Index" in Table 1, a value obtained by subtracting the overall ERP level of the respective examples from the overall ERP level of Comparative Example 1 (the difference between each example and Comparative Example 1) is shown. If the weight in Table 1 is a positive value, it means that the weight of the wheel was reduced relative to Comparative Example 1. If the quietness index in Table 1 is a positive value, it means that the quietness of the wheel improved relative to Comparative Example 1. Comparative Example 1 was a wheel in which a straight line was provided instead of the second curve 142 in the contour 14 on the outer circumferential side of the boss 10. Therefore, in Table 1, the radius of curvature R2 of the second curve 142 of Comparative Example 1 is shown as ∞. The radius of curvature R1 of the first curve 141 was the same in Examples 1 to 6 and Comparative Example 1, and was smaller than the radius of curvature R2 of the second curve 142 in Examples 1 to 6.

As shown in Table 1, in each of Examples 1 to 6, the difference in weight relative to Comparative Example 1 was a positive value, and thus the weight of the wheel was reduced compared to Comparative Example 1. Such a reduction in the **weight** of the wheels has a significant influence on reducing the weight of the entire railway vehicle which uses the wheels, and on reducing the weight of the entire train. In other words, a railway vehicle has two trucks, one at the front and one at the rear, with four wheels being mounted on each truck, and thus each railway vehicle is provided with eight wheels. Therefore, when the weight of the wheels is reduced, the overall weight of the railway vehicle is reduced by a multiple of eight times the amount of the reduction in weight per wheel. In a train formed of a plurality of railway vehicles, the weight will be reduced by an amount equivalent to eight times the amount of the reduction in weight per wheel × the number of railway vehicles.

Further, as illustrated in Table 1, for each of Examples 1 to 6 also, the quietness index was about the same level as or better than that of Comparative Example 1, and thus quietness of about the same level as or better than that of Comparative Example 1 was secured.

In Example 5 in which the radius of curvature R2 of the second curve 142 was made 700 mm, the quietness of the wheel was the same as the quietness of Comparative Example 1. Further, in Example 6 in which the radius of curvature R2 of the second curve 142 was made 107 mm, although the weight of the wheel was significantly reduced compared to Comparative Example 1, the quietness of the wheel decreased slightly compared to Comparative Example 1. On the other hand, in Examples 1 to 4 in which the radius of curvature R2 of the second curve 142 was within the range of 108 mm or more to less than 700 mm, the quietness of the wheel improved compared to Comparative Example 1.

In Examples 1 to 4, the radius of curvature R2 of the second curve 142 was 200 mm or less. In Examples 1 to 4, the degree of reduction in the weight of the wheel was relatively large compared to Comparative Example 1.

It has been confirmed by the analysis that by providing the second curve 142 in the contour 14 of the boss 10, a reduction in the weight of the wheel can be realized while maintaining the quietness of the wheel when the railway vehicle is running. In particular, it has been found that when the radius of curvature R2 of the second curve 142 is set within the range of 108 mm or more to less than 700 mm, the quietness is favorable. Further, it has been confirmed that when the radius of curvature R2 of the second curve 142 is 200 mm or less, it is easier to reduce the weight of the wheel.

[Second Example]

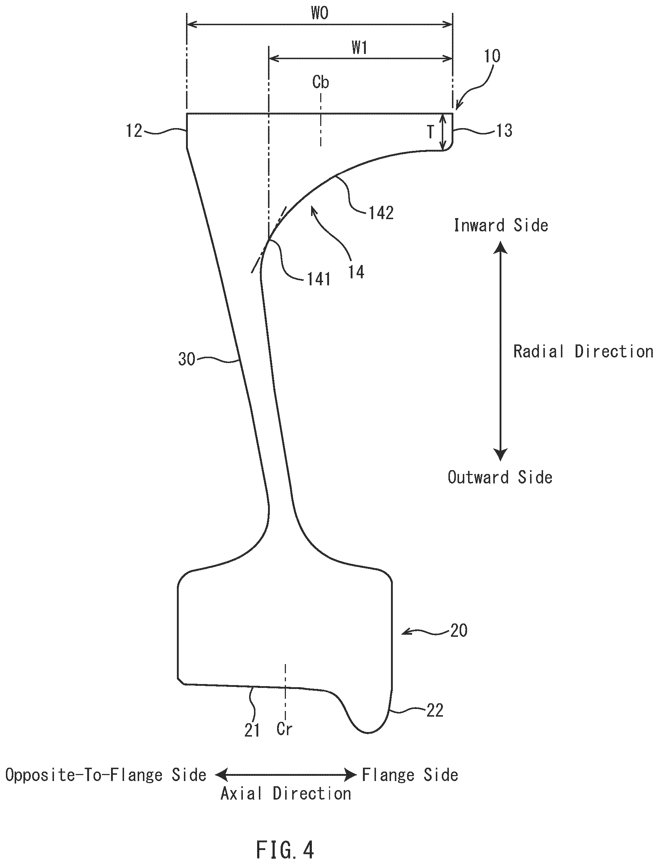

Analysis and evaluation were carried out in the same manner as in the First Example with respect to a wheel having a different shape to the wheel of the First Example. The outer edge of the longitudinal section of the wheel used in the analysis is illustrated in FIG. 4.

In contrast to the First Example in which the contour 14 including the first curve 141 and the second curve 142 was provided on the opposite-to-flange side of the boss 10 (FIG. 1), in the Second Example, as illustrated in FIG. 4, the contour 14 including the first curve 141 and the second curve 142 was provided on the flange side. Further, whereas in the First Example the web 30 was inclined in the radial direction so that the outer circumferential portion was located on the opposite-to-flange side relative to the inner circumferential portion, in the Second Example the web 30 was inclined in the radial direction so that the outer circumferential portion was located on the flange side relative to the inner circumferential portion, which is the opposite to the First Example. In addition, whereas in the First Example the rim-width center Cr was located on the flange side relative to the boss-width center Cb, in the Second Example the rim-width center Cr was located on the opposite-to-flange side relative to the boss-width center Cb.

The conditions and results of the analysis are shown in Table 2.

[Table 2]

TABLE 2

|  | Radius of Curvature R2 of Second Curve (mm) | Boss Thickness T (mm) | Boss Width Ratio W1/WO | Weight (kg) | Quietness Index |
|---|---|---|---|---|---|
| Example 7 | 112 | 22 | 0.68 | 8.5 | 0.05 |
| Example 8 | 130 | 26 | 0.70 | 5.9 | 0.03 |
| Example 9 | 183 | 36 | 0.71 | 1.6 | 0.01 |
| Comparative Example 2 | ∞ | 36 | 0.72 | 0.0 | 0.00 |
| *1 "Weight" is the difference in weight relative to Comparative Example 2. A positive value means the weight is lighter than Comparative Example 2.<br>*2 "Quietness Index" is the difference in the ERP level compared to Comparative Example 2. A positive value means the quietness is better than Comparative Example 2. | | | | | |

In the column "Weight" in Table 2, a value obtained by subtracting the wheel weight of the respective examples from the wheel weight of Comparative Example 2 (the difference between each example and Comparative Example 2) is shown. In the column "Quietness Index" in Table 2, a value obtained by subtracting the overall ERP level of the respective examples from the overall ERP level of Comparative Example 2 (the difference between each example and Comparative Example 2) is shown. If the weight in Table 2 is a positive value, it means that the weight of the wheel was reduced relative to Comparative Example 2. If the quietness index in Table 2 is a positive value, it means that the quietness of the wheel improved relative to Comparative Example 2. Comparative Example 2 was a wheel in which a straight line was provided instead of the second curve 142 in the contour 14 of the boss 10 of the wheel shape illustrated in FIG. 4. Therefore, in Table 2, the radius of curvature R2 of the second curve 142 of Comparative Example 2 is shown as ∞. The radius of curvature R1 of the first curve 141 was the same in Examples 7 to 9 and Comparative Example 2, and was smaller than the radius of curvature R2 of the second curve 142 in Examples 7 to 9.

As shown in Table 2, in each of Examples 7 to 9, the difference in weight relative to Comparative Example 2 was a positive value, and thus the weight of the wheel was reduced compared to Comparative Example 2. Further, for each of Examples 7 to 9 also, the quietness index was a positive value, and thus the quietness improved relative to Comparative Example 2.

It was confirmed by the analysis that, with respect to a different wheel shape from the First Example also, by providing the second curve 142 in the contour 14 of the boss 10, a reduction in the weight of the wheel can be realized while maintaining the quietness of the wheel when the railway vehicle is running.

[Third Example]

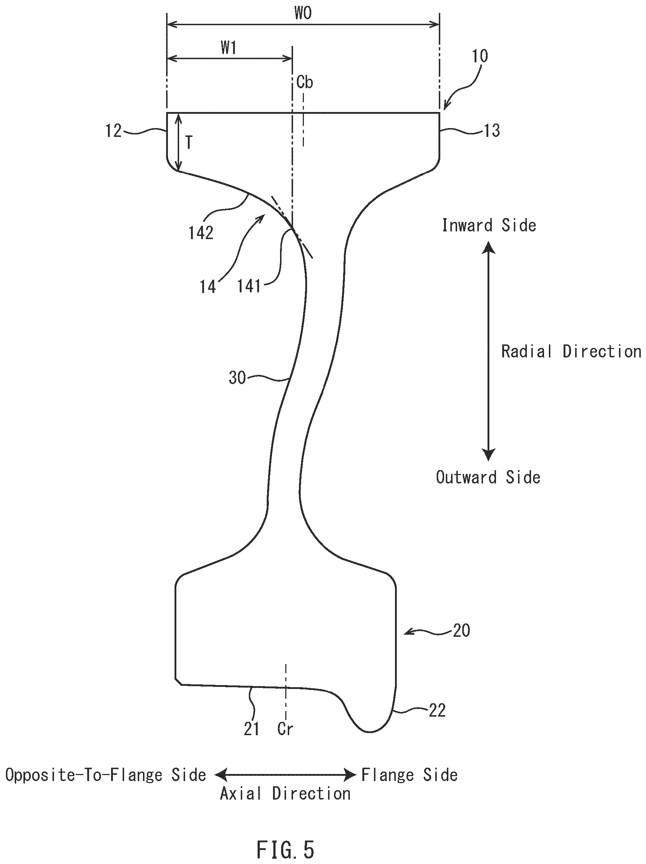

Analysis and evaluation were carried out in the same manner as described above with respect to a wheel having a different shape to the wheels of the First and Second Examples. The outer edge of the longitudinal section of the wheel used in the analysis is illustrated in FIG. 5.

As illustrated in FIG. 5, in the Third Example the web 30 was curved, which is different from the First and Second Examples. In the Third Example, a wheel shape in which the rim-width center Cr was located on the opposite-to-flange side relative to the boss-width center Cb was used.

The conditions and results of the analysis are shown in Table 3.

[Table 3]

TABLE 3

|  | Radius of Curvature R2 of Second Curve (mm) | Boss Thickness T (mm) | Boss Width Ratio W1/WO | Weight (kg) | Quietness Index |
|---|---|---|---|---|---|
| Example 10 | 107 | 20 | 0.51 | 1.6 | 0.40 |
| Comparative Example 3 | ∞ | 32 | 0.44 | 0.0 | 0.00 |
| *1 "Weight" is the difference in weight relative to Comparative Example 3. A positive value means the weight is lighter than Comparative Example 3. *2 "Quietness Index" is the difference in the ERP level compared to Comparative Example 3. A positive value means the quietness is better than Comparative Example 3. | | | | | |

In the column "Weight" in Table 3, a value obtained by subtracting the wheel weight of the example from the wheel weight of Comparative Example 3 (the difference between the example and Comparative Example 3) is shown. In the column "Quietness Index" in Table 3, a value obtained by subtracting the overall ERP level of the example from the overall ERP level of Comparative Example 3 (the difference between the example and Comparative Example 3) is shown. If the weight in Table 3 is a positive value, it means that the weight of the wheel was reduced relative to Comparative Example 3. If the quietness index in Table 3 is a positive value, it means that the quietness of the wheel improved relative to Comparative Example 3. Comparative Example 3 was a wheel in which a straight line was provided instead of the second curve 142 in the contour 14 of the boss 10 of the wheel shape illustrated in FIG. 5. Therefore, in Table 3, the radius of curvature R2 of the second curve 142 of Comparative Example 3 is shown as ∞. The radius of curvature R1 of the first curve 141 was the same in Example 10 and Comparative Example 3, and was smaller than the radius of curvature R2 of the second curve 142 in Example 10.

As shown in Table 3, in Example 10 the difference in weight relative to Comparative Example 3 was a positive value, and thus the weight of the wheel was reduced compared to Comparative Example 3. Further, in Example 10 the quietness index was a positive value, and thus the quietness improved relative to Comparative Example 3.

It was confirmed by the analysis that, with respect to a different wheel shape from the First and Second Examples also, by providing the second curve 142 in the contour 14 of the boss 10, a reduction in the weight of the wheel can be realized while maintaining the quietness of the wheel when the railway vehicle is running.

[Fourth Example]

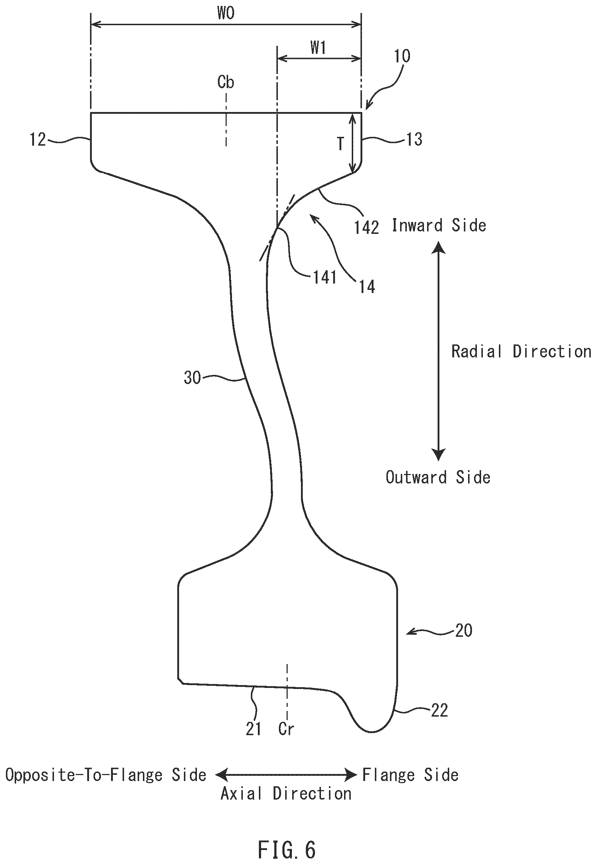

Analysis and evaluation were carried out in the same manner as described above with respect to a wheel having a different shape to the wheels of the First to Third Examples. The outer edge of the longitudinal section of the wheel used in the analysis is illustrated in FIG. 6.

The wheel shape in the Fourth Example was based on a wheel shape that is commonly used. As illustrated in FIG. 6, in the Fourth Example a wheel shape was used in which although the web 30 was curved similarly to the Third Example, the rim-width center Cr was located on the flange side relative to the boss-width center Cb. Further, in contrast to the Third Example in which the contour 14 including the first curve 141 and the second curve 142 was provided on the opposite-to-flange side of the boss 10 (FIG. 5), in the Fourth Example, as illustrated in FIG. 6, the contour 14 including the first curve 141 and the second curve 142 was provided on the flange side.

The conditions and results of the analysis are shown in Table 4.

[Table 4]

TABLE 4

| | Radius of Curvature R2 of Second Curve (mm) | Boss Thickness T (mm) | Boss Width Ratio W1/WO | Weight (kg) | Quietness Index |
|---|---|---|---|---|---|
| Example 11 | 107 | 21 | 0.30 | 1.7 | 0.40 |
| Comparative Example 4 | ∞ | 32 | 0.30 | 0.0 | 0.00 |

*1 "Weight" is the difference in weight relative to Comparative Example 4. A positive value means the weight is lighter than Comparative Example 4.
*2 "Quietness Index" is the difference in the ERP level compared to Comparative Example 4. A positive value means the quietness is better than Comparative Example 4.

In the column "Weight" in Table 4, a value obtained by subtracting the wheel weight of the example from the wheel weight of Comparative Example 4 (the difference between the example and Comparative Example 4) is shown. In the column "Quietness Index" in Table 4, a value obtained by subtracting the overall ERP level of the example from the overall ERP level of Comparative Example 4 (the difference between the example and Comparative Example 4) is shown. If the weight in Table 4 is a positive value, it means that the weight of the wheel was reduced relative to Comparative Example 4. If the quietness index in Table 4 is a positive value, it means that the quietness of the wheel improved relative to Comparative Example 4. Comparative Example 4 was a wheel in which a straight line was provided instead of the second curve 142 in the contour 14 of the boss 10 of the wheel shape illustrated in FIG. 6. Therefore, in Table 4, the radius of curvature R2 of the second curve 142 of Comparative Example 4 is shown as ∞. The radius of curvature R1 of the first curve 141 was the same in Example 11 and Comparative Example 4, and was smaller than the radius of curvature R2 of the second curve 142 in Example 11.

As illustrated in Table 4, in Example 11 the difference in weight relative to Comparative Example 4 was a positive value, and thus the weight of the wheel was reduced compared to Comparative Example 4. Further, in Example 11 the quietness index was a positive value, and thus the quietness improved relative to Comparative Example 4.

It was confirmed by the analysis that, with respect to a different wheel shape from the First to Third Examples also, by providing the second curve 142 in the contour 14 of the boss 10, a reduction in the weight of the wheel can be realized while maintaining the quietness of the wheel when the railway vehicle is running.

REFERENCE SIGNS LIST

100: Wheel
10: Boss
12, 13: End Face
14: Contour
141: First Curve
142: Second Curve
20: Rim
30: Web
R1, R2: Radius of Curvature

**Claims**

1. A wheel for a railway vehicle, comprising:

a cylindrical boss;
a rim arranged on an outer circumferential side of the boss; and
a web that connects the boss and the rim, wherein
when the wheel is viewed in longitudinal section, the boss includes a contour extending from the web to an end face in an axial direction of the boss,
the contour includes:

a first curve that is continuous with the web and is curved concavely toward an inward side of the boss, and that has a first radius of curvature; and
a second curve that is arranged on the end face side of the boss relative to the first curve, and is curved concavely toward the inward side of the boss, and that has a second radius of curvature which is greater than the first radius of curvature, and
a path length of the second curve is greater than a path length of the first curve.

2. The wheel according to claim 1, wherein
the second radius of curvature is 108 mm or more and less than 700 mm.

100

Inward Side

Radial Direction

Outward Side

Opposite-To-Flange Side ◄──────► Flange Side
Axial Direction

FIG. 1

FIG. 2

FIG. 3

FIG. 4

FIG.5

FIG. 6

FIG. 7

## INTERNATIONAL SEARCH REPORT

| International application No. |
|---|
| **PCT/JP2023/032281** |

**A.    CLASSIFICATION OF SUBJECT MATTER**

*B60B 17/00*(2006.01)i
FI:    B60B17/00 B; B60B17/00 F; B60B17/00 G

According to International Patent Classification (IPC) or to both national classification and IPC

**B.    FIELDS SEARCHED**

Minimum documentation searched (classification system followed by classification symbols)

B60B17/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2004-050880 A (RAILWAY TECHNICAL RESEARCH INSTITUTE) 19 February 2004 (2004-02-19)<br>      entire text, all drawings | 1-2 |
| A | JP 2015-500177 A (JOINT STOCK COMPANY VYKSA STEEL WORKS) 05 January 2015 (2015-01-05)<br>      entire text, all drawings | 1-2 |
| A | JP 2015-500771 A (VOITH PATENT GMBH) 08 January 2015 (2015-01-08)<br>      entire text, all drawings | 1-2 |
| A | JP 03-504112 A (DNEPROPETROVSKY METALLURGICHESKY INSTITUT) 12 September 1991 (1991-09-12)<br>      entire text, all drawings | 1-2 |
| A | US 5899517 A (VGS VERKEHRSTECHNIK GMBH) 04 May 1999 (1999-05-04)<br>      entire text, all drawings | 1-2 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| **31 October 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/032281**

| Patent document cited in search report | | | Publication date (day/month/year) | Patent family member(s) | | | Publication date (day/month/year) |
|---|---|---|---|---|---|---|---|
| JP | 2004-050880 | A | 19 February 2004 | (Family: none) | | | |
| JP | 2015-500177 | A | 05 January 2015 | US | 2014/0300122 | A1 | |
| | | | | entire text, all drawings | | | |
| | | | | EP | 2792502 | A1 | |
| | | | | entire text, all drawings | | | |
| | | | | CA | 2866669 | A1 | |
| | | | | entire text, all drawings | | | |
| | | | | WO | 2013/089596 | A1 | |
| | | | | CN | 104136235 | A | |
| JP | 2015-500771 | A | 08 January 2015 | WO | 2013/092659 | A1 | |
| | | | | DE | 102011121785 | A1 | |
| | | | | CN | 103946035 | A | |
| JP | 03-504112 | A | 12 September 1991 | US | 5039152 | A | |
| | | | | entire text, all drawings | | | |
| | | | | WO | 1990/009290 | A1 | |
| | | | | EP | 416103 | A1 | |
| US | 5899517 | A | 04 May 1999 | WO | 1996/018512 | A1 | |
| | | | | DE | 4444077 | A1 | |
| | | | | DE | 9421838 | U1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10029401 A
- JP 2009545484 W
- WO 2020241401 A
- WO 2022091764 A